# EUROPEAN PATENT APPLICATION

(11) **EP 4 603 236 A1**
(43) Date of publication of application: **20.08.2025**
(21) Application number: 25154586.9
(22) Date of filing: 29.01.2025
(51) Int. Cl.: B25J 9/16, G06V 20/58, F16P 3/14

(54) **SENSOR, CONTROL METHOD FOR SENSOR, PROGRAM, AND SAFETY MONITORING SYSTEM**

(30) Priority: 19.02.2024 JP 2024022797
(71) Applicant: OMRON Corporation, Kyoto 600-8530 (JP)
(72) Inventor: MISHIMA, Kazuma, Kyoto, Kyoto-shi, 600-8530 (JP)
(74) Representative: Isarpatent

(57) **Abstract**

To enhance productivity at a production site where a robot and a worker work together. A sensor includes an image generation unit configured to generate a distance image and a luminance image of a predetermined region, a first point cloud data creation unit configured to create, on the basis of the distance image, first point cloud data that is point cloud data of the predetermined region, a mask data creation unit configured to create, when a tag is detected from the luminance image, mask data for masking a predetermined range in the predetermined region on the basis of an analysis result obtained by analyzing the tag, and a second point cloud data creation unit configured to create second point cloud data by excluding point cloud data of a mobile body provided with the tag from the first point cloud data on the basis of the mask data.

## Description

### TECHNICAL FIELD

The present invention relates to a sensor, a sensor control method, a program, and a safety monitoring system.

### BACKGROUND ART

At a production site, workers and robots carry out tasks while working together. At such a production site, efforts are made to ensure worker safety while also enhancing productivity. For example, Patent Literature 1 discloses a technique for enhancing both safety and productivity at a production site where robots and workers work together.

### CITATION LIST

### PATENT LITERATURE

Patent Literature 1: Japanese Patent No. 7036078

### SUMMARY OF INVENTION

### TECHNICAL PROBLEM

At a production site, when a sensor detects that a person such as a worker is approaching a hazard such as a robot, the robot is decelerated or stopped. At a production site, a mobile device (mobile body) other than a person may be in operation. When an object approaching the robot is detected, the robot is decelerated or stopped regardless of whether the object is a person or a mobile device, resulting in a problem of a reduction in productivity.

The present invention has been made in view of the above problems, and an object of the present invention is to provide a technique for enhancing productivity at a production site where a robot and a worker work together.

### SOLUTION TO PROBLEM

A sensor according to an aspect of the present invention includes an image generation unit configured to generate a distance image and a luminance image of a predetermined region, a first point cloud data creation unit configured to create, on the basis of the distance image, first point cloud data that is three-dimensional point cloud data of the predetermined region, a mask data creation unit configured to create, when a tag is detected from the luminance image, mask data for masking a predetermined range in the predetermined region on the basis of an analysis result obtained by analyzing the tag, and a second point cloud data creation unit configured to create second point cloud data by excluding point cloud data of a mobile body provided with the tag from the first point cloud data on the basis of the mask data. With safety in the predetermined region being monitored using the second point cloud data obtained by excluding the point cloud data of the mobile body provided with the tag from the first point cloud data, it is possible to enhance productivity at a production site in which a robot and a worker work together.

The sensor includes an analysis unit configured to analyze the tag, and the analysis unit is configured to acquire identification information of the tag on the basis of the luminance image, acquire size data related to the mobile body on the basis of the identification information of the tag, calculate position coordinates of the tag and angle information of the tag on the basis of the distance image and the luminance image or on the basis of the luminance image, and generate the mask data on the basis of the size data, the position coordinates of the tag, the angle information of the tag, and relationship information indicating a relative positional relationship between the tag and the mobile body. The tag has a geometric feature.

The sensor includes a determination unit configured to determine a positional relationship between a worker and a hazard in the predetermined region on the basis of the second point cloud data. The sensor includes a determination unit configured to determine, when the tag is not detected from the luminance image, a positional relationship between a worker and a hazard in the predetermined region on the basis of the first point cloud data.

The present invention can also be regarded as a control method including at least a portion of the processing described above, a program for causing a computer to execute at least a portion of the processing described above, or a computer-readable storage medium having such a program recorded in a non-transitory manner. Further, the present invention can be regarded as a safety monitoring system including at least a portion of the processing described above. The configurations and processing described above can be combined to configure the present invention as long as no technical contradiction arises.

### ADVANTAGEOUS EFFECTS OF INVENTION

According to the present invention, it is possible to enhance productivity at a production site where a robot and a worker work together.

### BRIEF DESCRIPTION OF DRAWINGS

FIG. 1 is a schematic configuration diagram of a control system.
FIG. 2 is a block diagram illustrating a configuration of a sensor.
FIG. 3 is a flowchart describing a processing flow of the control system.
FIG. 4 is a view illustrating an example of a traveling device including a tag.
FIG. 5 is a view illustrating an example of a transport device including a tag.
FIG. 6 is a functional block diagram illustrating a configuration of a control unit.
FIG. 7 is a flowchart describing a processing flow of the control system.
FIG. 8 is a schematic configuration diagram of a control system according to a first modified example.
FIG. 9 is a functional block diagram illustrating a configuration of the control unit according to a second modified example.
FIG. 10 is a functional block diagram illustrating a configuration of a control device according to the second modified example.

### DESCRIPTION OF EMBODIMENTS

Hereinafter, application examples and embodiments will be described with reference to the drawings. The application examples and embodiments described below are aspects of the present application, and do not limit the scope of rights of the present application.

### <Application Examples>

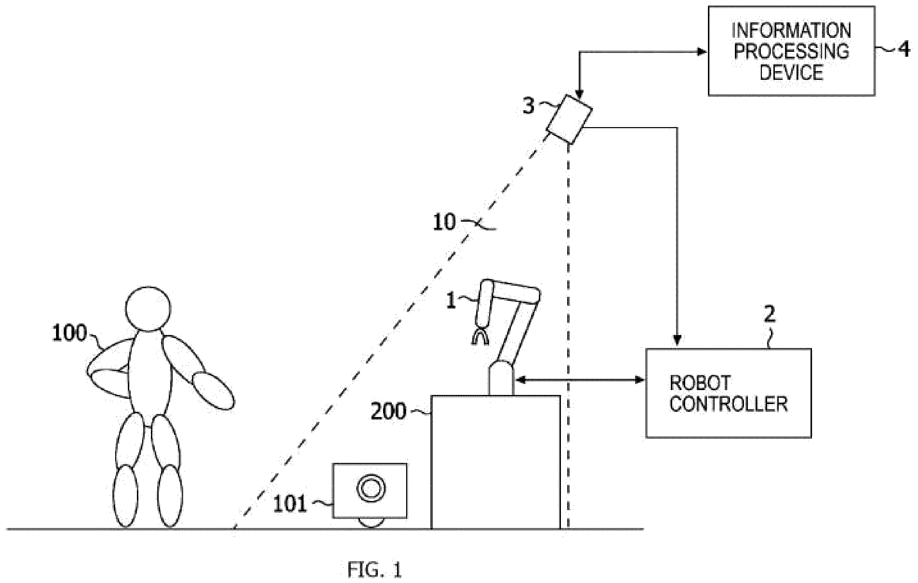

FIG. 1 is a schematic configuration diagram of a control system (safety monitoring system). In the control system of FIG. 1, in an environment in which a hazard such as a fixed robot 1, a worker (person) 100, and a mobile robot 101 work together at a production site such as a factory, for example, the fixed robot 1 is controlled while movement of the worker 100 is identified. The fixed robot 1 is, for example, a fixedly installed robot such as a vertical articulated robot, a horizontal articulated robot, or a parallel link robot. The mobile robot 101 is, for example, a traveling device such as an autonomous mobile robot (AMR) or an automated guided vehicle (AGV). Further, the mobile robot 101 may be a transport device in which a manipulator is attached to a traveling device. In FIG. 1, the fixed robot 1 is installed on a workbench 200. The fixed robot 1 is controlled by a robot controller (control device) 2. A protected region (hazardous region) 10 is set in the vicinity or surrounding area of the fixed robot 1. The protected region 10 is a virtual three-dimensional region for detecting that an object is approaching the fixed robot 1, and is set at least partially in the vicinity or surrounding area of the fixed robot 1. The protected region 10 is set as the surrounding area of the fixed robot 1 in FIG. 1, but the protected region 10 may be set as at least one of a frontward area, a rearward area, or a lateral area of the fixed robot 1. Further, a plurality of protected regions 10 may be set. The protected region 10 is determined in accordance with safety standards, taking into account an operation range of the fixed robot 1.

A three-dimensional safety sensor 3 (hereinafter referred to as sensor 3) is installed at a desired position in the production site. The protected region 10 and a monitoring area can be set as desired. The monitoring area is a region to be monitored by the sensor 3. A user may operate an information processing device 4 to set the protected region 10 and the monitoring area for the sensor 3. The information processing device 4 is, for example, a personal computer or a tablet terminal. For example, the entire surrounding area of the protected region 10 may be set as the monitoring area, or part of the surrounding area of the protected region 10 may be set as the monitoring area. The monitoring area may be set as part of a measurement area of the sensor 3 or may be set as the entire measurement area of the sensor 3. The measurement area of the sensor 3 is a measurable range of the sensor 3.

The sensor 3 generates point cloud data of the monitoring area and detects whether an object has entered the protected region 10 using the point cloud data of the monitoring area. The point cloud data of the monitoring area is data indicating three-dimensional coordinates of each point of an object present in the monitoring area. When a distance between predetermined position coordinates (for example, center position coordinates) in the protected region 10 and position coordinates of an object such as a worker is equal to or less than a predetermined distance (safety distance), the sensor 3 may determine that the object has entered the protected region 10. When entry of an object into the protected region 10 is detected by the sensor 3, predetermined control (safety control) is performed. For example, a control signal (detection signal) is input from the sensor 3 to the robot controller 2, and the robot controller 2 performs control for decelerating or stopping the operation of the fixed robot 1 on the basis of the control signal. The control signal may be input from the sensor 3 to an alarm device, and the alarm device may output an alert.

At a production site, a mobile body such as a traveling device or a transport device may be in operation. When the sensor 3 detects entry of a mobile body into the protected region 10 and safety control such as deceleration or stoppage of the operation of the fixed robot 1 is performed, productivity is reduced. In the control system of FIG. 1, even if a mobile body enters the protected region 10, safety control such as deceleration or stoppage of the operation of the fixed robot 1 is not performed. By using such a control system, it is possible to enhance productivity at a production site where the fixed robot 1 and the worker 100 work together.

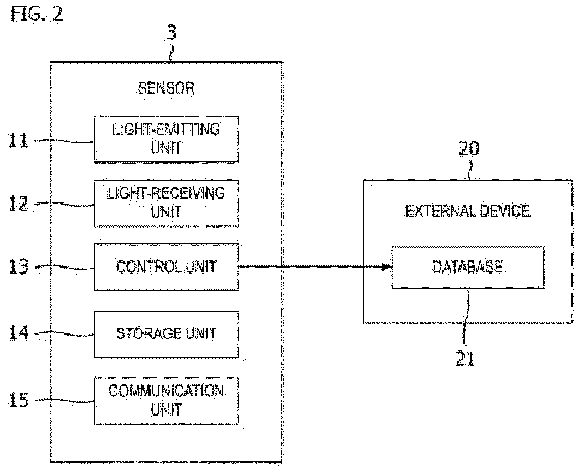

FIG. 2 is a block diagram illustrating a configuration of the sensor 3. As illustrated in FIG. 2, the sensor 3 includes a light-emitting unit 11, a light-receiving unit 12, a control unit 13, a storage unit 14, and a communication unit 15. The light-emitting unit 11 emits light (for example, infrared light), and the light-receiving unit 12 receives reflected light. The light-emitting unit 11 is, for example, a light-emitting diode (LED). The light-receiving unit 12 is, for example, a photodiode. As an example of the sensor 3, a time-of-flight (TOF) sensor that acquires a distance image from the TOF of light is adopted. For example, an indirect TOF sensor that estimates a difference in time from a phase difference between emitted light and reflected light may be used as the sensor 3.

The control unit 13 is a control device (controller) that controls the entire operation of the sensor 3. The control unit 13 may be constituted by a dedicated device or a general-purpose computer. The control unit 13 includes hardware resources such as a processor (central processing unit (CPU)), a memory, and a storage. The memory may be a random access memory (RAM). The storage may be a nonvolatile storage device (for example, read only memory (ROM) or flash memory). A function of each processing unit (functional unit) of the control unit 13 is implemented by loading a program stored in the storage into the memory and executing the program by the processor. Note that the configuration of the control unit 13 is not limited thereto. For example, all or some of the functions of the control unit 13 may be configured by a circuit such as an application-specific integrated circuit (ASIC) or a field programmable gate array (FPGA), or all or some of the functions of the control unit 13 may be executed by a cloud server or another device.

The control unit 13 periodically generates a distance image and a luminance image. The control unit 13 measures the distance to an object (subject) by the TOF method, calculates the measured distance to a surface of the object for each pixel, and generates a distance image. The TOF method is a method of measuring a distance from a time of flight of light. The control unit 13 generates point cloud data of the monitoring area on the basis of the distance image. The control unit 13 measures an intensity of the reflected light and generates a luminance image on the basis of the intensity of the reflected light. The control unit 13 accesses a database (DB) 21 of an external device 20 to acquire information and data from the database 21. The storage unit 14 stores the information and the data. The storage unit 14 may include at least one of a memory or a storage. The communication unit 15 is an interface for performing wired or wireless communication.

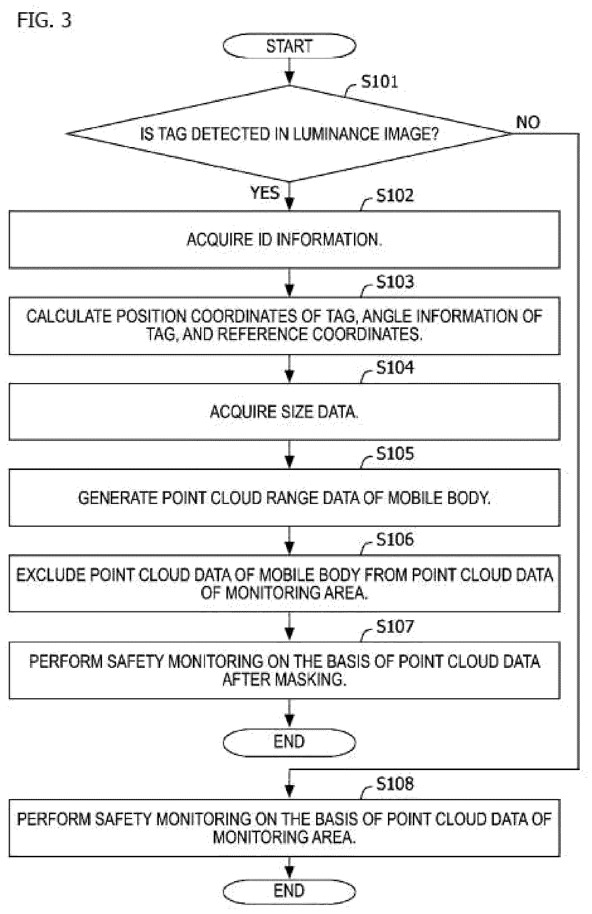

FIG. 3 is a flowchart describing a processing flow of the control system. The processing flow of the control system will now be described with reference to the flowchart of FIG. 3. In step S101, the control unit 13 determines whether a tag (marker) is detectable from the luminance image. The tag has a geometric feature. A geometric pattern composed of two colors (for example, white and black) having different brightnesses may be formed on the tag. The tag is, for example, an April Tag, but is not limited thereto, and may be another geometric tag.

When the tag is detectable from the luminance image (S101: YES), the processing proceeds to step S102. When the tag is not detectable from the luminance image (S101: NO), the processing proceeds to step S108. When the tag is not reliably detectable, the control unit 13 determines that the tag is not detectable from the luminance image. For example, when an outer shape of the tag can be recognized in the luminance image, but the content of the tag cannot be analyzed, the control unit 13 may determine that the tag is not detectable from the luminance image.

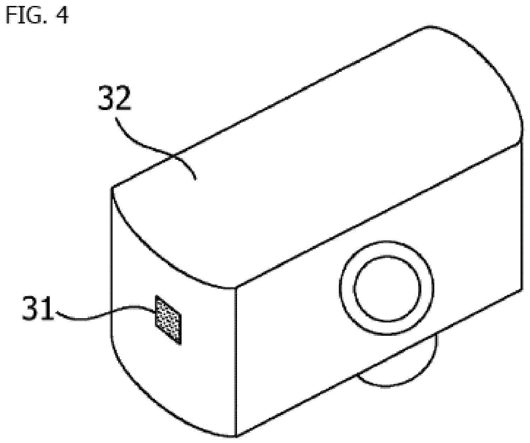

The tag is provided on a traveling device or a transport device. FIG. 4 is a view illustrating an example of a traveling device 32 including a tag 31. In the example illustrated in FIG. 4, the tag 31 is attached to a front surface of a housing of the traveling device 32. The location of the tag 31 is not limited to the example illustrated in FIG. 4, and the tag 31 may be attached to a side surface or a back surface of the housing of the traveling device 32. Further, a plurality of the tags 31 may be attached to a plurality of locations of the housing of the traveling device 32. When the outer shape of the tag 31 of the traveling device 32 can be recognized in the luminance image, but the content of the tag 31 cannot be analyzed, the control unit 13 may communicate with the traveling device 32 via the communication unit 15 and output an instruction signal to the traveling device 32. An instruction signal for instructing the traveling device 32 to move so that the tag 31 faces the front of the sensor 3 may be output.

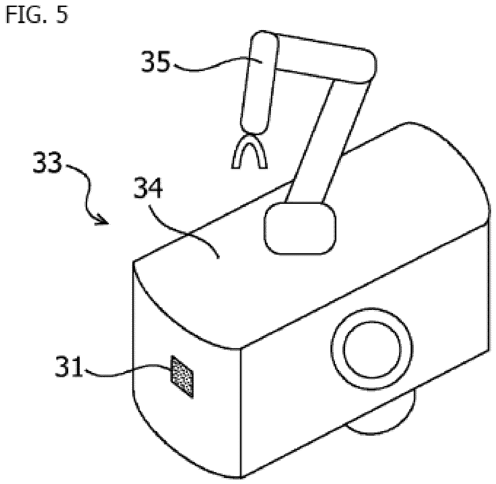

FIG. 5 is a view illustrating an example of a transport device 33 including the tag 31. The transport device 33 includes a traveling device 34 and a manipulator 35. In the example illustrated in FIG. 5, the tag 31 is provided on a front surface of a housing of the traveling device 34. The location of the tag 31 is not limited to the example illustrated in FIG. 5, and the tag 31 may be attached to a side surface or a back surface of the housing of the traveling device 34. Further, a plurality of the tags 31 may be attached to the housing of the traveling device 34. The tag 31 may be attached to the manipulator 35, or a plurality of the tags 31 may be attached to the manipulator 35. When the outer shape of the tag 31 of the transport device 33 can be recognized in the luminance image, but the content of the tag 31 cannot be analyzed, the control unit 13 may communicate with the transport device 33 via the communication unit 15 and output an instruction signal to the transport device 33. An instruction signal for instructing the transport device 33 to move so that the tag 31 faces the front of the sensor 3 may be output. An instruction signal for instructing the manipulator 35 to move so that the tag 31 faces the front of the sensor 3 may be output.

In step S102, the control unit 13 acquires identification (ID) information by reading the geometric pattern of the tag in the luminance image. The ID information is unique identification information that does not overlap, and is different for each mobile body. The mobile body is an example of a traveling device and a transport device.

In step S103, the control unit 13 calculates position coordinates (x, y, z) of the tag and angle information of the tag on the basis of the luminance image and the distance image. The position coordinates of the tag are, for example, coordinates (x, y, z) of the tag in a camera coordinate system. The position coordinates of the tag may be coordinates of a center of the tag. The angle information of the tag includes an angle with respect to a reference plane (horizontal plane, ground) and an angle with respect to a plane orthogonal to the reference plane. In step S103, the control unit 13 acquires the reference coordinates stored in the storage unit 14. The reference coordinates are relationship information indicating a relative positional relationship between the tag and the mobile body. The reference coordinates are, for example, coordinates (x, y, z) indicating an installation position of the tag with respect to the mobile body, and a position of a predetermined area (for example, corner portion) of the mobile body may be set as the origin. In step S103, the control unit 13 may calculate the position coordinates of the tag and the angle information of the tag on the basis of the luminance image.

In step S104, the control unit 13 acquires size data of the mobile body from the database 21 on the basis of the ID information. The database 21 stores the ID information and the size data in association with each other. The size data of the mobile body may include data related to values of dimensions (vertical width, horizontal width, and height) of the mobile body or may include data related to values obtained by adding a margin to the dimensions of the mobile body.

In step S105, the control unit 13 generates point cloud range data of the mobile body on the basis of the size data of the mobile body, the position coordinates of the tag, the angle information of the tag, and the reference coordinates. The tag is provided on the mobile body. The control unit 13 calculates position coordinates (x, y, z) of the mobile body on the basis of the position coordinates of the tag, the reference coordinates, and the size data of the mobile body. The control unit 13 may calculate coordinates at a center of the mobile body as the position coordinates of the mobile body. The tag provided on the mobile body is inclined in accordance with the angle information of the mobile body (information related to a direction in which the mobile body faces), and thus the angle information of the tag differs for each set of angle information of the mobile body. The control unit 13 calculates the angle information of the mobile body on the basis of the angle information of the tag. The control unit 13 generates the point cloud range data of the mobile body on the basis of the position coordinates of the mobile body, the angle information of the mobile body, and the size data of the mobile body. The point cloud range data of the mobile body is mask data for masking a predetermined range in the monitoring area, and is data indicating a range in which the mobile body is present in the monitoring area. That is, the point cloud range data of the mobile body is data indicating a range occupied by the point cloud data of the mobile body in the point cloud data of the monitoring area.

In step S106, the control unit 13 excludes (deletes) the point cloud data of the mobile body from the point cloud data of the monitoring area on the basis of the point cloud range data of the mobile body, thereby invalidating (masking) the point cloud data of the mobile body in the point cloud data of the monitoring area. Hereinafter, the point cloud data obtained by excluding the point cloud data of the mobile body from the point cloud data of the monitoring area is referred to as point cloud data after masking.

In step S107, the control unit 13 performs safety monitoring on the basis of the point cloud data after masking. For example, the control unit 13 performs safety monitoring by determining whether an object such as the worker 100 has entered the protected region 10.

In step S108, the control unit 13 performs safety monitoring on the basis of the point cloud data of the monitoring area. A tag is not detected from the luminance image, and thus the control unit 13 treats the object in the monitoring area as a person.

According to the embodiment, the control unit 13 performs safety monitoring on the basis of the point cloud data after masking and thus, even if a mobile body enters the protected region 10, does not perform safety control such as deceleration or stoppage of the operation of the fixed robot 1. Thus, by not performing the safety control when the mobile body has entered the protected region 10, it is possible to enhance productivity at a production site where the fixed robot 1 and the worker 100 work together.

Preferably, the tag is provided on the mobile body in a way that facilitates detection of the tag from the luminance image. For example, when the sensor 3 is attached above the monitoring area, the tag may be provided on the mobile body so that the tag faces upward. For example, when the sensor 3 is installed facing obliquely downward, the tag may be provided on the mobile body so that the tag faces obliquely upward.

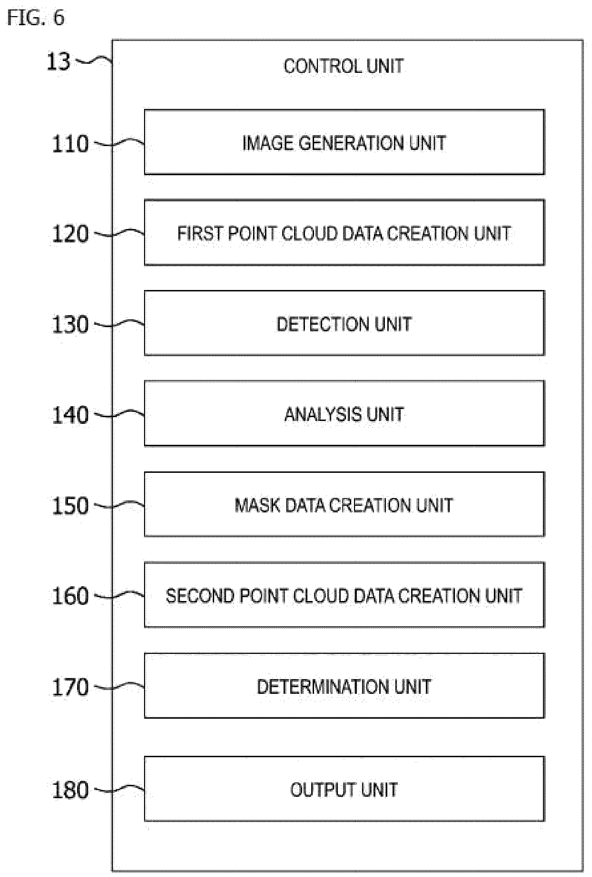

FIG. 6 is a functional block diagram illustrating a configuration of the control unit 13. The control unit 13 includes an image generation unit 110, a first point cloud data creation unit 120, a detection unit 130, an analysis unit 140, a mask data creation unit 150, a second point cloud data creation unit 160, a determination unit 170, and an output unit 180. The image generation unit 110 generates a distance image and a luminance image of a predetermined region. The predetermined region may be, for example, the monitoring area. The first point cloud data creation unit 120 creates first point cloud data that is the point cloud data of the predetermined region. The detection unit 130 detects a tag from the luminance image. When a tag is detected from the luminance image, the analysis unit 140 analyzes the detected tag. The mask data creation unit 150 creates mask data for masking a predetermined range in the predetermined region on the basis of the analysis result obtained by analyzing the tag by the analysis unit 140. The second point cloud data creation unit 160 creates second point cloud data by excluding the point cloud data of the mobile body from the first point cloud data on the basis of the mask data. The determination unit 170 determines the positional relationship between the worker 100 and a hazard such as the fixed robot 1 in the predetermined region. The output unit 180 outputs a predetermined signal.

An example of processing performed by the analysis unit 140 when a tag has a geometric feature will now be described. The analysis unit 140 acquires identification (ID) information of the tag on the basis of the luminance image. The geometric feature of the tag is, for example, a geometric pattern provided on the tag. In the storage unit 14, the geometric feature of the tag and the ID information of the tag are stored in association with each other. The analysis unit 140 analyzes the luminance image and extracts the geometric feature of the tag in the luminance image. The analysis unit 140 acquires the ID information of the tag from the geometric feature of the tag in the luminance image. The analysis unit 140 acquires the size data of the mobile body from the database 21 on the basis of the ID information of the tag. The ID information and the size data may be stored in the storage unit 14 in association with each other. The analysis unit 140 may acquire the size data of the mobile body from the storage unit 14. The analysis unit 140 calculates the position coordinates of the tag, the angle information of the tag, and the reference coordinates on the basis of the distance image and the luminance image. The mask data creation unit 150 generates point cloud range data (mask data) of the mobile body on the basis of the size data of the mobile body, the position coordinates of the tag, the angle information of the tag, and the reference coordinates.

When the tag is detected from the luminance image, the determination unit 170 determines the positional relationship between the worker 100 and the hazard such as the fixed robot 1 in the predetermined region on the basis of the second point cloud data. The determination unit 170 may determine whether a distance between the position coordinates of the worker 100 and the predetermined position coordinates (center position coordinates of the hazard such as the fixed robot 1) in the predetermined region is equal to or less than a predetermined distance on the basis of the second point cloud data. When the tag is not detected from the luminance image, the determination unit 170 determines the positional relationship between the worker 100 and the hazard such as the fixed robot 1 in the predetermined region on the basis of the first point cloud data. The determination unit 170 may determine whether the distance between the position coordinates of the worker 100 and the predetermined position coordinates in the predetermined region is equal to or less than the predetermined distance on the basis of the first point cloud data. When the distance between the position coordinates of the worker 100 and the predetermined position coordinates in the predetermined region is equal to or less than the predetermined distance, the output unit 180 outputs a control signal (detection signal) to the robot controller 2. The robot controller 2 performs control for decelerating or stopping the operation of the fixed robot 1 on the basis of the control signal.

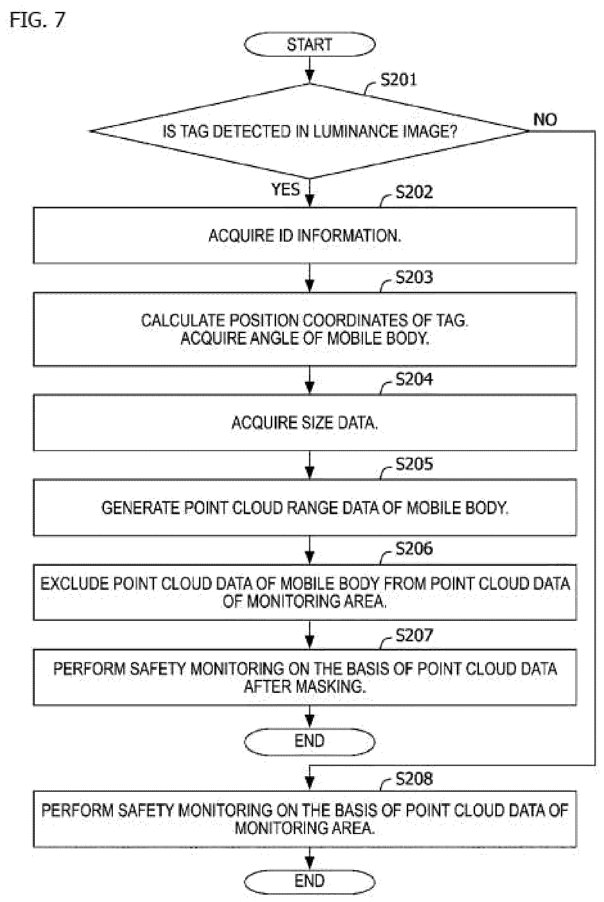

Although a tag having a geometric feature is used in the above description, the tag is not limited thereto, and a tag including a character string, a number string, or a combination of characters and numbers indicating identification (ID) information may be used. FIG. 7 is a flowchart describing a processing flow of the control system when a tag including ID information is used. The processing flow of the control system when a tag including ID information is used will now be described with reference to the flowchart of FIG. 7.

In step S201, the control unit 13 determines whether a tag is detectable from the luminance image. The tag includes a character string, a number string, or a combination of characters and numbers indicating the ID information of the tag. For example, a character string, a number string, or a combination of characters and numbers indicating the ID information of the tag may be displayed on a front surface of the tag. When the tag can be extracted from the luminance image (S201 : YES), the processing proceeds to step S202. When the tag cannot be extracted from the luminance image (S201 : NO), the processing proceeds to step S208. When the tag is not reliably detectable, the control unit 13 determines that the tag is not detectable from the luminance image. For example, when the outer shape of the tag can be recognized in the luminance image, but the content of the tag cannot be analyzed, the control unit 13 may determine that the tag is not detectable from the luminance image.

In step S202, the control unit 13 acquires the ID information by reading the ID information of the tag in the luminance image. The ID information is unique identification information that does not overlap, and is different for each mobile body.

In step S203, the control unit 13 calculates the position coordinates (x, y, z) of the tag on the basis of the luminance image and the distance image. In step S203, the control unit 13 acquires the angle information of the mobile body from the mobile body via the communication unit 15. The angle information of the mobile body may include an angle of the mobile body in a planar direction or may include a direction in which the mobile body faces. For example, the mobile body may calculate the angle information of the mobile body by performing self-position estimation processing on the basis of map data of the production site and a landmark arranged at the production site. Alternatively, in step S203, the control unit 13 may calculate the angle information of the mobile body by recognizing a shape of the mobile body on the basis of the distance image and the luminance image.

In step S204, the control unit 13 acquires the size data of the mobile body from the database 21 on the basis of the ID information. The database 21 stores the ID information and the size data in association with each other. The size data of the mobile body may include data related to values of dimensions (vertical width, horizontal width, and height) of the mobile body or may include data related to values obtained by adding a margin to the dimensions of the mobile body. The control unit 13 may acquire the size data of the mobile body using a result of recognition of the shape of the mobile body on the basis of the distance image and the luminance image.

In step S205, the control unit 13 generates the point cloud range data of the mobile body on the basis of the size data of the mobile body, the position coordinates of the tag, and the angle information of the mobile body. The tag is provided on the mobile body. The control unit 13 may calculate the position coordinates (x, y, z) of the mobile body on the basis of the position coordinates of the tag. The control unit 13 may calculate the position coordinates of the tag as the position coordinates of the mobile body. The control unit 13 may calculate the position coordinates of the mobile body on the basis of the position coordinates of the tag and the size data of the mobile body. The control unit 13 generates the point cloud range data of the mobile body on the basis of the position coordinates of the mobile body, the angle information of the mobile body, and the size data of the mobile body. The point cloud range data of the mobile body is mask data for masking a predetermined range in the monitoring area, and is data indicating a range in which the mobile body is present in the monitoring area. That is, the point cloud range data of the mobile body is data indicating a range occupied by the point cloud data of the mobile body in the point cloud data of the monitoring area.

In step S206, the control unit 13 excludes (deletes) the point cloud data of the mobile body from the point cloud data of the monitoring area on the basis of the point cloud range data of the mobile body, thereby invalidating (masking) the point cloud data of the mobile body in the point cloud data of the monitoring area. Hereinafter, the point cloud data obtained by excluding the point cloud data of the mobile body from the point cloud data of the monitoring area is referred to as point cloud data after masking.

In step S207, the control unit 13 performs safety monitoring on the basis of the point cloud data after masking. For example, the control unit 13 performs safety monitoring by determining whether an object such as the worker 100 has entered the protected region 10.

In step S208, the control unit 13 performs safety monitoring on the basis of the point cloud data of the monitoring area. A tag is not detected from the luminance image, and thus the control unit 13 treats the object in the monitoring area as a person.

An example of the processing of the analysis unit 140 when a tag includes a character string, a number string, or a combination of characters and numbers indicating identification (ID) information of the tag will now be described. The analysis unit 140 analyzes the luminance image. The analysis unit 140 acquires identification (ID) information of the tag on the basis of the luminance image. The analysis unit 140 acquires the size data of the mobile body from the database 21 on the basis of the ID information of the tag. The ID information and the size data may be stored in the storage unit 14 in association with each other. The analysis unit 140 may acquire the size data of the mobile body from the storage unit 14. The analysis unit 140 calculates the position coordinates of the tag on the basis of the distance image and the luminance image. The analysis unit 140 acquires the angle information of the mobile body from the mobile body via the communication unit 15. The mask data creation unit 150 generates the point cloud range data (mask data) of the mobile body on the basis of the size data of the mobile body, the position coordinates of the tag, and the angle information of the mobile body.

The present embodiment can also be applied to a two-dimensional laser scanner. The distance image may be generated by the two-dimensional laser scanner, a camera may be separately provided, the luminance image may be generated by the camera, and the luminance image may be transmitted to the two-dimensional laser scanner.

### <First Modified Example>

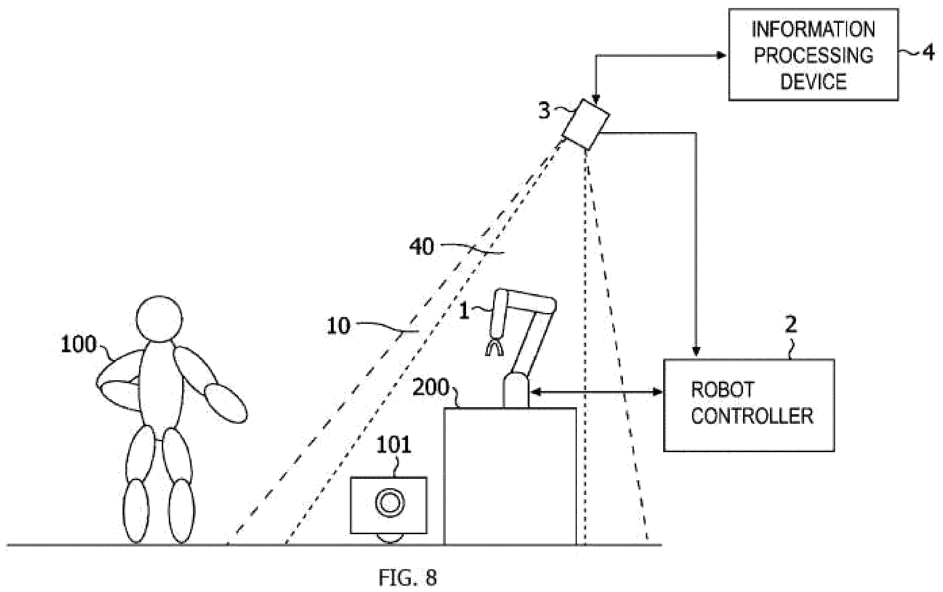

A modified example will now be described. FIG. 8 is a schematic configuration diagram of a control system (safety monitoring system) according to a first modified example. In the control system illustrated in FIG. 8, an interference prevention region 40 is set in addition to the control system illustrated in FIG. 1. The interference prevention region 40 is a region for preventing interference between the fixed robot 1 and the mobile robot 101. The interference prevention region 40 is a virtual three-dimensional region for detecting that the mobile robot 101 is approaching the fixed robot 1, and is set at least partially in the vicinity or surrounding area of the fixed robot 1. In the example illustrated in FIG. 8, the interference prevention region 40 is set in a range narrower than that of the protected region 10, but is not limited to this example, and the interference prevention region 40 may be set in the same range as that of the protected region 10, or may be set in a range wider than that of the protected region 10. Further, the interference prevention region 40 is set in the area surrounding the fixed robot 1 in FIG. 8, but the interference prevention region 40 may be set in at least one of the frontward area, the rearward area, or the lateral area of the fixed robot 1. Further, a plurality of the interference prevention regions 40 may be set. The user may operate the information processing device 4 to set the interference prevention region 40 for the sensor 3.

The sensor 3 generates the point cloud data of the monitoring area and detects whether the mobile robot 101 has entered the interference prevention region 40 using the point cloud data of the monitoring area. When a distance between predetermined position coordinates (for example, center position coordinates) in the interference prevention region 40 and the position coordinates of the mobile robot 101 is equal to or less than a predetermined distance (interference distance), the sensor 3 may determine that the mobile robot 101 has entered the interference prevention region 40. When the sensor 3 detects the entry of the mobile robot 101 into the interference prevention region 40, predetermined control (safety control) is performed. For example, a control signal (interference flag) is input from the sensor 3 to the robot controller 2, and the robot controller 2 performs control for decelerating or stopping the operation of the fixed robot 1 on the basis of the control signal.

### <Second Modified Example>

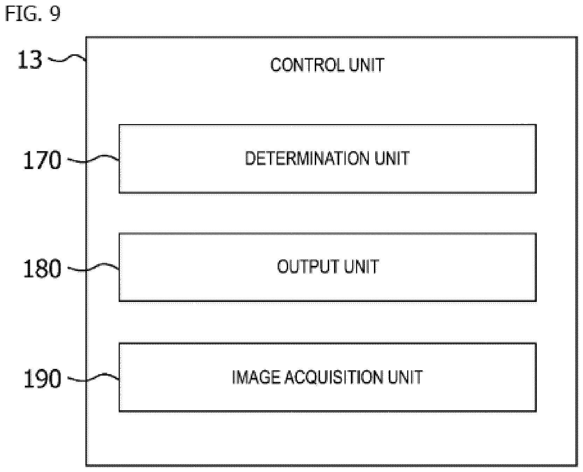

A second modified example will now be described. FIG. 9 is a functional block diagram illustrating a configuration of the control unit 13 according to a second modified example. The control unit 13 includes the determination unit 170, the output unit 180, and an image acquisition unit 190. The image acquisition unit 190 acquires the distance image and the luminance image of the predetermined region. The image acquisition unit 190 may generate the distance image and the luminance image of the predetermined region. The image acquisition unit 190 may generate the distance image of the predetermined region or may acquire the luminance image from another sensor (camera).

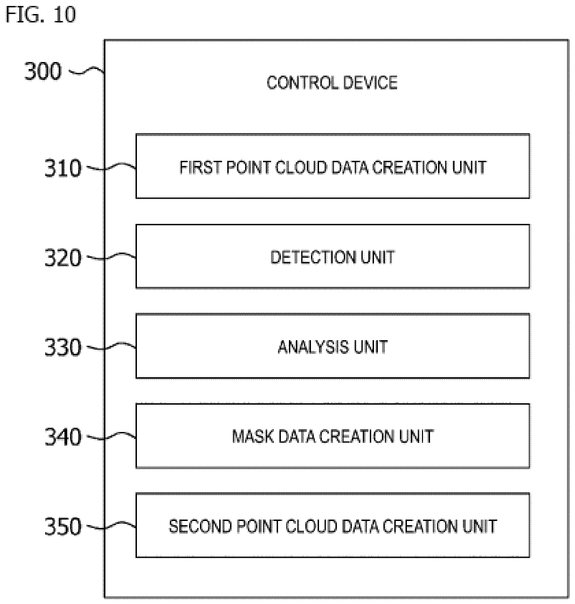

The control system according to the second modified example may include a control device 300. FIG. 10 is a functional block diagram illustrating a configuration of the control device 300 according to the second modified example. The control device 300 may be, for example, an information processing device such as a personal computer or a tablet terminal. The control device 300 may be constituted by a dedicated device or may be constituted by a general-purpose computer. The control device 300 includes hardware resources such as a processor (CPU), a memory, and a storage. A function of each processing unit (functional unit) of the control device 300 is implemented by loading a program stored in the storage into the memory and executing the program by the processor. Note that the configuration of the control device 300 is not limited thereto. For example, all or some of the functions of the control device 300 may be configured by a circuit such as an ASIC or a FPGA, or all or some of the functions of the control device 300 may be executed by a cloud server or another device. The control device 300 includes a communication unit that is an interface for performing wired or wireless communication. Communication is performed between the control unit 13 and the control device 300.

The control device 300 includes a first point cloud data creation unit 310, a detection unit 320, an analysis unit 330, a mask data creation unit 340, and a second point cloud data creation unit 350. The first point cloud data creation unit 310 creates first point cloud data that is point cloud data of the predetermined region. The detection unit 320 detects a tag from the luminance image. When a tag is detected from the luminance image, the analysis unit 330 analyzes the detected tag. The mask data creation unit 340 creates mask data for masking a predetermined range in the predetermined region on the basis of the analysis result obtained by analyzing the tag by the analysis unit 330. The second point cloud data creation unit 350 creates second point cloud data by excluding the point cloud data of the mobile body from the first point cloud data on the basis of the mask data. The processing executed by the first point cloud data creation unit 310, the detection unit 320, the analysis unit 330, the mask data creation unit 340, and the second point cloud data creation unit 350 is the same as the processing executed by the first point cloud data creation unit 120, the detection unit 130, the analysis unit 140, the mask data creation unit 150, and the second point cloud data creation unit 160.

In the second modified example, the control device 300 may execute the processing of steps S101 to S106 in FIG. 3, and the control unit 13 may execute the processing of steps S107 and S108 in FIG. 3. In the second modified example, the control device 300 may execute the processing of steps S201 to S206 in FIG. 7, and the control unit 13 may execute the processing of steps S207 and S208 in FIG. 7. The control unit 13 according to the second modified example may include at least one of the first point cloud data creation unit 120, the detection unit 130, the analysis unit 140, the mask data creation unit 150, or the second point cloud data creation unit 160. In the second modified example, the control unit 13 and the control device 300 may share and execute the processing of steps S101 to S106 in FIG. 3. Further, in the second modified example, the control unit 13 and the control device 300 may share and execute the processing of steps S201 to S206 of FIG. 7.

### <Third Modified Example>

A third modified example will now be described. The sensor 3 may acquire a movement range of the mobile robot 101 and determine whether part of the movement range of the mobile robot 101 and part of the protected region 10 overlap. The sensor 3 may acquire the movement range of the mobile robot 101 from the mobile robot 101. The sensor 3 may acquire the movement range of the mobile robot 101 from an upper device that manages the movement range of the mobile robot 101. When part of the movement range of the mobile robot 101 and part of the protected region 10 overlap, a control signal (interference flag) may be input from the sensor 3 to the robot controller 2. The robot controller 2 may perform control for decelerating or stopping the operation of the fixed robot 1 on the basis of the control signal. When part of the movement range of the mobile robot 101 and part of the protected region 10 overlap, the sensor 3 may issue an instruction for changing the movement range of the mobile robot 101 (movement range change instruction). A control signal for the movement range change instruction may be input from the sensor 3 to the mobile robot 101. The control signal for the movement range change instruction may be input to the mobile robot 101 from an upper device. When the control signal for the movement range change instruction is input to the mobile robot 101, the movement range of the mobile robot 101 is changed. For example, the movement range of the mobile robot 101 is narrowed, changing the movement range of the mobile robot 101 so that the movement range of the mobile robot 101 and the protected region 10 do not overlap. This suppresses interference between the operation of the fixed robot 1 and the movement of the mobile robot 101. Accordingly, it is possible to avoid frequent performance of safety control and enhance productivity.

In the third modified example, the sensor 3 may determine whether part of the movement range of the mobile robot 101 and part of the interference prevention region 40 in the first modified example overlap. When part of the movement range of the mobile robot 101 and part of the interference prevention region 40 overlap, a control signal (interference flag) may be input from the sensor 3 to the robot controller 2. The robot controller 2 may perform control for decelerating or stopping the operation of the fixed robot 1 on the basis of the control signal. When part of the movement range of the mobile robot 101 and part of the interference prevention region 40 overlap, the sensor 3 may issue the movement range change instruction. Changing the movement range of the mobile robot 101 suppresses interference between the operation of the fixed robot 1 and the movement of the mobile robot 101. Accordingly, it is possible to avoid frequent performance of safety control and enhance productivity.

### <Computer-Readable Recording Medium>

A program for causing an information processing device or any other machine or device (hereinafter referred to as a computer or the like) to implement any of the functions described above may be recorded in a recording medium readable by the computer or the like. The functions can be provided by causing the computer or the like to load the program from the recording medium and to execute the program.

Here, the recording medium readable by the computer or the like refers to a recording medium capable of storing information such as data or programs by an electrical, magnetic, optical, mechanical, or chemical action in such a manner that the computer or the like can read the information from the recording medium. Among such recording media, those which can be removed from the computer or the like include, for example, flexible disks, magneto-optical discs, CD-ROMs, CD-R/Ws, DVDs, Blu-ray discs, and flash memories. Recording media fixed to the computer or the like include hard disks and ROMs.

### <Supplementary Note 1>

A sensor (3) including an image generation unit (110) configured to generate a distance image and a luminance image of a predetermined region;
a first point cloud data creation unit (120) configured to create, on the basis of the distance image, first point cloud data that is three-dimensional point cloud data of the predetermined region;
a mask data creation unit (150) configured to create, when a tag is detected from the luminance image, mask data for masking a predetermined range in the predetermined region on the basis of an analysis result obtained by analyzing the tag; and
a second point cloud data creation unit (160) configured to create second point cloud data by excluding point cloud data of a mobile body provided with the tag from the first point cloud data on the basis of the mask data.

### <Supplementary Note 2>

The sensor (3) according to Supplementary Note 1, including
an analysis unit (140) configured to analyze the tag, wherein
the analysis unit (140) is configured to
acquire identification information of the tag on the basis of the luminance image, acquire size data related to the mobile body on the basis of the identification information of the tag,
calculate position coordinates of the tag and angle information of the tag on the basis of the distance image and the luminance image or on the basis of the luminance image, and
generate the mask data on the basis of the size data, the position coordinates of the tag, the angle information of the tag, and relationship information indicating a relative positional relationship between the tag and the mobile body.

### <Supplementary Note 3>

The sensor (3) according to Supplementary Note 2, wherein
the tag has a geometric feature.

### <Supplementary Note 4>

The sensor (3) according to any one of Supplementary Notes 1 to 3, including
a determination unit configured to determine a positional relationship between a worker and a hazard in the predetermined region on the basis of the second point cloud data.

### <Supplementary Note 5>

The sensor (3) according to any one of Supplementary Notes 1 to 3, including a determination unit configured to determine, when the tag is not detected from the luminance image, a positional relationship between a worker and a hazard in the predetermined region on the basis of the first point cloud data.

### <Supplementary Note 6>

A method for controlling the sensor (3), the method including:
generating a distance image and a luminance image of a predetermined region;
creating, on the basis of the distance image, first point cloud data that is three-dimensional point cloud data of the predetermined region;
creating, when a tag is detected from the luminous image, mask data for masking a predetermined range in the predetermined region on the basis of an analysis result obtained by analyzing the tag; and
creating second point cloud data by excluding point cloud data of a mobile body provided with the tag from the first point cloud data on the basis of the mask data.

### <Supplementary Note 7>

A program for causing a computer to execute
generating a distance image and a luminance image of a predetermined region; creating, on the basis of the distance image, first point cloud data that is three-dimensional point cloud data of the predetermined region;
creating, when a tag is detected from the luminous image, mask data for masking a predetermined range in the predetermined region on the basis of an analysis result obtained by analyzing the tag; and
creating second point cloud data by excluding point cloud data of a mobile body provided with the tag from the first point cloud data on the basis of the mask data.

### <Supplementary Note 8>

A safety monitoring system including
an image acquisition unit (190) configured to acquire a distance image and a luminance image of a predetermined region;
a first point cloud data creation unit (310) configured to create, on the basis of the distance image, first point cloud data that is three-dimensional point cloud data of the predetermined region;
a mask data creation unit (340) configured to create, when a tag is detected from the luminance image, mask data for masking a predetermined range in the predetermined region on the basis of an analysis result obtained by analyzing the tag; and
a second point cloud data creation unit (350) configured to create second point cloud data by excluding point cloud data of a mobile body provided with the tag from the first point cloud data on the basis of the mask data.

### REFERENCE SIGNS LIST

1: Fixed robot
2: Robot controller
3: Three-dimensional safety sensor
4: Information processing device
10: Protected region
11: Light-emitting unit
12: Light-receiving unit
13: Control unit
14: Storage unit
15: Communication unit
20: External device
21: Database
31: Tag
32, 34: Traveling device
33: Transport device
34: Traveling device
35: Manipulator
40: Interference prevention region
100: Worker
101: Mobile robot
110: Image generation unit
120, 310: First point cloud data creation unit
130, 320: Detection unit
140, 330: Analysis unit
150, 340: Mask data creation unit
160, 350: Second point cloud data creation unit
170: Determination unit
180: Output unit
300: Control device

## Claims

1. A sensor (3) comprising:
an image generation unit (110) configured to generate a distance image and a luminance image of a predetermined region;
a first point cloud data creation unit (120) configured to create, on the basis of the distance image, first point cloud data that is three-dimensional point cloud data of the predetermined region;
a mask data creation unit (150) configured to create, when a tag is detected from the luminance image, mask data for masking a predetermined range in the predetermined region on the basis of an analysis result obtained by analyzing the tag; and
a second point cloud data creation unit (160) configured to create second point cloud data by excluding point cloud data of a mobile body provided with the tag from the first point cloud data on the basis of the mask data.

2. The sensor (3) according to claim 1, comprising
an analysis unit (140) configured to analyze the tag, wherein
the analysis unit (140) is configured to
acquire identification information of the tag on the basis of the luminance image, acquire size data related to the mobile body on the basis of the identification information of the tag,
calculate position coordinates of the tag and angle information of the tag on the basis of the distance image and the luminance image or on the basis of the luminance image, and
generate the mask data on the basis of the size data, the position coordinates of the tag, the angle information of the tag, and relationship information indicating a relative positional relationship between the tag and the mobile body.

3. The sensor (3) according to claim 2, wherein
the tag has a geometric feature.

4. The sensor (3) according to any one of claims 1 to 3, comprising
a determination unit configured to determine a positional relationship between a worker and a hazard in the predetermined region on the basis of the second point cloud data.

5. The sensor (3) according to any one of claims 1 to 3, comprising
a determination unit configured to determine, when the tag is not detected from the luminance image, a positional relationship between a worker and a hazard in the predetermined region on the basis of the first point cloud data.

6. A method for controlling a sensor (3), the method comprising:
generating a distance image and a luminance image of a predetermined region;
creating, on the basis of the distance image, first point cloud data that is three-dimensional point cloud data of the predetermined region;
creating, when a tag is detected from the luminance image, mask data for masking a predetermined range in the predetermined region on the basis of an analysis result obtained by analyzing the tag; and
creating second point cloud data by excluding point cloud data of a mobile body provided with the tag from the first point cloud data on the basis of the mask data.

7. A program for causing a computer to execute:
generating a distance image and a luminance image of a predetermined region;
creating, on the basis of the distance image, first point cloud data that is three-dimensional point cloud data of the predetermined region;
creating, when a tag is detected from the luminance image, mask data for masking a predetermined range in the predetermined region on the basis of an analysis result obtained by analyzing the tag; and
creating second point cloud data by excluding point cloud data of a mobile body provided with the tag from the first point cloud data on the basis of the mask data.

8. A safety monitoring system comprising:
an image acquisition unit (190) configured to acquire a distance image and a luminance image of a predetermined region;
a first point cloud data creation unit (310) configured to create, on the basis of the distance image, first point cloud data that is three-dimensional point cloud data of the predetermined region;
a mask data creation unit (340) configured to create, when a tag is detected from the luminance image, mask data for masking a predetermined range in the predetermined region on the basis of an analysis result obtained by analyzing the tag; and
a second point cloud data creation unit (350) configured to create second point cloud data by excluding point cloud data of a mobile body provided with the tag from the first point cloud data on the basis of the mask data.
